# EUROPEAN PATENT APPLICATION

(11) **EP 2 053 848 A1**
(43) Date of publication of application: **29.04.2009**
(21) Application number: 07023566.8
(22) Date of filing: 05.12.2007
(51) Int. Cl.: H04N 5/44, H04N 5/765, H04N 5/00, H04N 7/24

(54) **Method of recovering missed parts of mobile TV broadcasts**

(30) Priority: 23.10.2007 US 876776
(71) Applicant: CyberLink Corp., Hsin-Tien City, Taipei Hsien (TW)
(72) Inventor: Tseng, Wei-Hsin, Taipei Hsien (TW); Lee, Wei-Jen, Taipei County (TW)
(74) Representative: Schaeberle, Steffen

(57) **Abstract**

To recover part of a program that was missed in Mobile TV, a mobile device (200) receives a program during a first broadcast (301, 401), and detects a corrupted segment of the program (302, 402), then stores a first time and a second time of the corrupted segment detected during the first broadcast (303, 403). The first time corresponds to a start of the corrupted segment and the second time corresponds to an end of the corrupted segment. Finally, a replacement segment is captured during a second broadcast of the same program (304) or downloaded from a server (404) according to the first time and the second time of the corrupted segment detected during the first broadcast.

## Description

The present invention relates to a method of recovering a corrupted period of a broadcast in Mobile TV and a related mobile device according to the pre-characterizing clauses of claims 1, 4, 8, 14, and 18.

Mobile TV provides television-type broadcasting available for viewing in mobile phones. Mobile TV can be broadcast using a number of different technologies, two of the most popular being DVB-H (Digital Video Broadcasting - Handheld) developed by the Digital Video Broadcasting Project, and DMB (Digital Multimedia Broadcasting) developed by South Korea. In either case, programs available on Mobile TV can be broadcast to cellular phones, and other mobile devices, through a data signal transmitted by a base tower or a satellite.

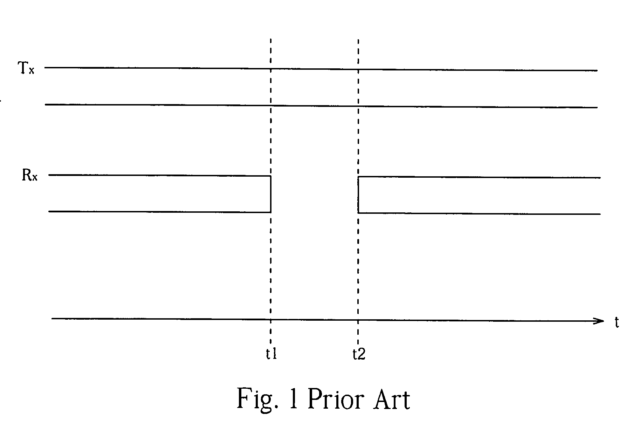

Due to the fact that the programs available on Mobile TV are broadcast through the air to the mobile devices, it is likely that, in certain conditions, the data signal will be lost. In other words, it is likely that, at times, the mobile device will enter an environment in which the data signal is too weak or unclear for a receiver in the mobile device to receive and decode properly. Please refer to Fig. 1, which is a diagram of losing the signal. Before the signal is lost at a first time t1, the signal is captured normally by the mobile device. The signal is lost until a second time t2, at which time the mobile device begins receiving the signal normally again. Loss of the signal could be due to the user of the mobile device entering an elevator or other environment with poor reception. In this situation, three scenarios could occur. First, the data signal may be degraded, such that quality of the program is compromised to a point where the program is not viewable. Second, the data signal may be lost for a period, or periods, of time, to be recovered later, but causing the user to miss a portion of the program, i.e. the situation described in Fig. 1. Third, the data signal may be lost and unrecoverable. In any case, the user has to either drop the portion of the video or wait for the next playback of the same program to re-watch the video again. If it is in recording progress, the recorder has to either skip the portion or the user has to issue another schedule for the second broadcast of the same program again.

This in mind, the present invention aims at providing a method of recovering a corrupted period of a broadcast in Mobile TV and a related mobile device that automatically recovers the corrupted period of the broadcast missed while a signal is lost or unclear.

This is achieved by a method of recovering a corrupted period of a broadcast in Mobile TV and a related mobile device according to claims 1, 4, 8, 14, and 18. The dependent claims pertain to corresponding further developments and improvements.

As will be seen more clearly from the detailed description following below, the claimed method of recovering a corrupted segment of a broadcast in Mobile TV and related mobile device include storing a first time and a second time of the corrupted segment detected during the broadcast, and downloading a replacement segment of the program from a server according to the first time and the second time.

In the following, the invention is further illustrated by way of example, taking reference to the accompanying drawings. Thereof
Fig. 1 is a diagram of losing a Mobile TV signal according to the prior art,
Fig. 2 is a diagram of a mobile device according to the present invention,
Fig. 3 is a diagram of recovering a Mobile TV signal according to the present invention,
Fig. 4 is a diagram of a method of recovering a corrupted segment of a program in Mobile TV according to a preferred embodiment of the present invention,
Fig. 5 is a diagram of a method of recovering a corrupted segment of a program in Mobile TV according to a second embodiment of the present invention,
Fig. 6 is a diagram of recovering a Mobile TV signal according to a third embodiment of the present invention, and
Fig. 7 is a diagram of a method of delaying a playback by processing a time-shifting function and recovery process when a signal is corrupted according to a third embodiment of the present invention.

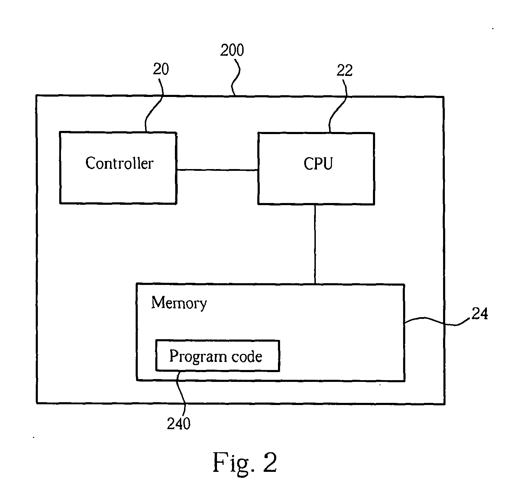

Please refer to Fig. 2, which is a diagram of a mobile device 200 according to the present invention. The mobile device 200 could be a cellular (mobile) phone, a smart phone, a PDA, a portable player, or a pocket PC, and comprises a controller 20, a processor 22, and a memory 24. The controller performs functions of the mobile device 200. The processor 22 is coupled to both the controller 20 and the memory 24 for controlling the controller 20 according to program code 240 stored in the memory 24. The processor 22 comprises means, or a detector, for detecting a corrupted segment of a broadcast. The detector can be implemented as hardware or software, or as an embedded device. The mobile device 200 could further comprise a storage device for receiving a program during a first broadcast.

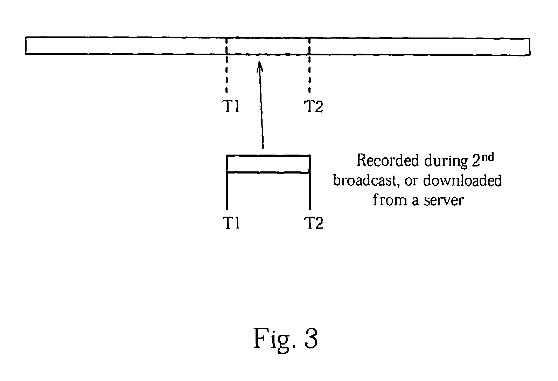

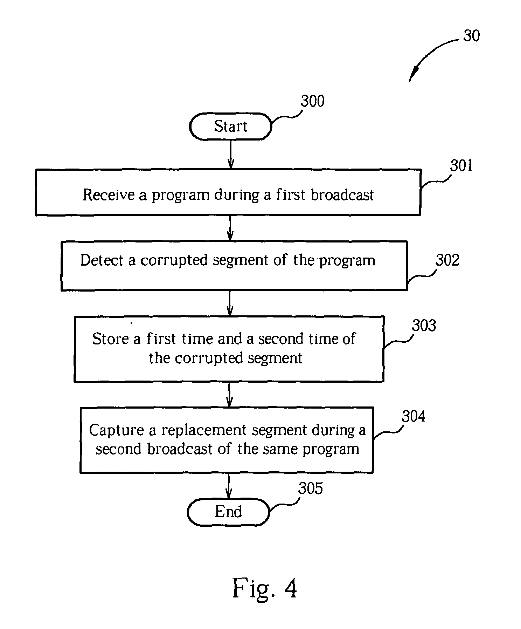

Please refer to Fig. 3 and Fig. 4, further referencing the situation described above shown in Fig. 1. Fig. 3 is a diagram of recovering a Mobile TV signal according to the present invention. Fig. 4 is a flowchart of a preferred embodiment of a procedure 30 for recovering a corrupted segment of a program in Mobile TV. The procedure 30 can be seen as the program code 240 in Fig. 2, and comprises the following steps:
Step 300: Start.
Step 301: Receive a program during a first broadcast.
Step 302: Detect a corrupted segment of the program.
Step 303: Store a first time and a second time of the corrupted segment.
Step 304: Capture a replacement segment during a second broadcast of the same program.
Step 305: End.

As described in Fig. 1, the signal may be lost at the first time t1, and later recovered at the second time t2. For example, the first time T 1 may be when the mobile device enters an environment, such as an elevator or basement, in which the data signal is too weak or unclear for a receiver in the mobile device to receive and decode properly, and the second time T2 may be when the mobile device enters an environment in which the data signal is strong for the receiver to receive properly. This is also represented in Fig. 3, which shows that a corrupted segment (indicated by a dotted line) of the broadcast is detected from a first time T1 to a second time T2 (Step 302) while the program is being received during the first broadcast (Step 301). In the present invention, the first time T1 and the second time T2 are both recorded in Step 303. Then, in Step 304, a replacement segment corresponding to the corrupted segment may be captured during the second broadcast of the program. The replacement segment may be captured during the second broadcast of the program from the first time T1 to the second time T2, relative to the second broadcast. Please note that the second broadcast of the program could overlap the first broadcast of the program. In other words, use of the words "first" and "second" does not necessarily indicate a chronological relationship between the first broadcast and the second broadcast.

The replacement segment captured during the second broadcast of the program may then be concatenated with the parts of the program captured during the first broadcast of the program. And, the mobile phone may display a notification to the user that the corrupted segment of the program has been recovered, and the program can be viewed in full.

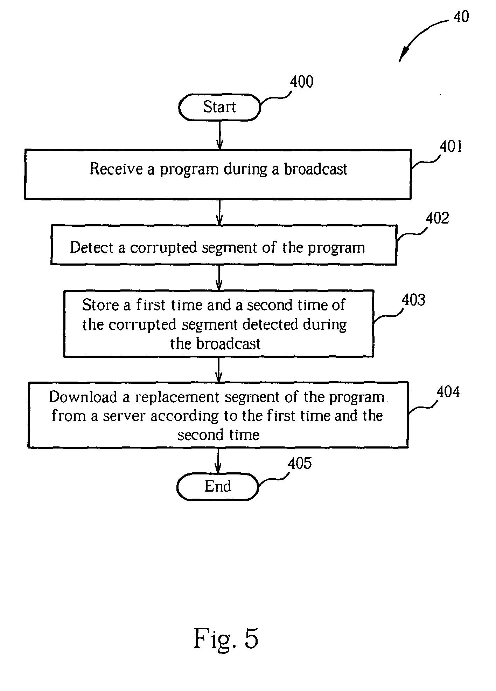

Please refer to Fig. 5, which is a flowchart of a procedure 40 for recovering a corrupted segment of a program in Mobile TV according to a second embodiment of the present invention. The procedure 40 can also be seen as the program code 240 of Fig. 2, and comprises the following steps:
Step 400: Start.
Step 401: Receive a program during a broadcast.
Step 402: Detect a corrupted segment of the program.
Step 403: Store a first time and a second time of the corrupted segment detected during the broadcast.
Step 404: Download a replacement segment of the program from a server according to the first time and the second time.
Step 405: End.

In the second embodiment, the first time T 1 and the second time T2 may both be recorded (Step 403) when the corrupted segment of the program is detected (Step 402) while receiving the program during the first broadcast (Step 401). This is shown in Fig. 3, where the corrupted segment is shown by a dotted line. Then, in Step 404, a connection may be established with a server (e.g. FTP, streaming, etc.) that can provide the replacement segment of the program for replacing the corrupted segment of the program, and the mobile device may download the replacement segment of the program from the server. The server may have the entire program available for download. The mobile phone may then concatenate the downloaded replacement segment of the program with the parts of the program captured during the first broadcast. The mobile phone may also display a notification stating that the program is complete and can be viewed.

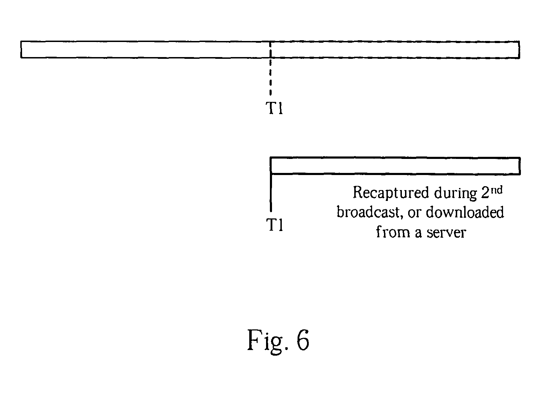

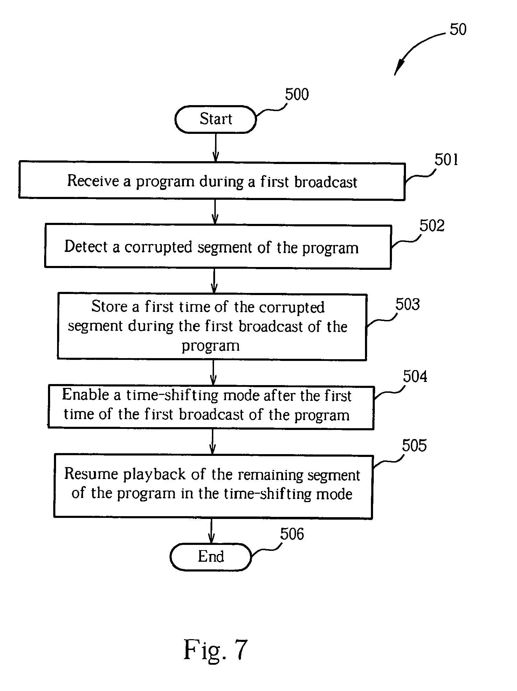

Please refer to Fig. 6 and Fig. 7, which are diagrams illustrating a procedure 50 for delaying a playback by processing a time-shifting function and recovery process when a signal is corrupted according to a third embodiment of the present invention. The procedure 50 can also be seen as the program code 240 of Fig. 2, and comprises the following steps:
Step 500: Start.
Step 501: Receive a program during a first broadcast.
Step 502: Detect a corrupted segment of the program.
Step 503: Store a first time of the corrupted segment during the first broadcast of the program.
Step 504: Enable a time-shifting mode after the first time of the first broadcast of the program.
Step 505: Resume playback of the remaining segment of the program in the time-shifting mode.
Step 506: End.

In the third embodiment, the first time T1 may be recorded (Step 503) when the corrupted segment is detected (Step 502) during the first broadcast of the program (Step 501). This is shown in Fig. 6, where the corrupted segment is shown by a dotted line. Then, in Step 504, the mobile phone enables the time-shifting function after T1. The time-shifting mode enables pausing the first broadcast of the program at the first time T1. In Step 505, the mobile phone resumes playback of the remaining segment of the program in the time-shifting mode.

Compared to the prior art, in which the user has to either drop the portion of the video or wait for the next playback of the same program to re-watch the video again, the present invention automatically recovers the corrupted segment, or segments, of the broadcast missed while the signal is lost, or unclear. Recovery of the corrupted segment can be accomplished by recording the replacement segment during the second broadcast of the program, or by downloading the replacement segment from the server. The present invention can also enable the time-shifting function and recovery process to allow the user to resume viewing of the program at a later time. In this way, the present invention greatly conveniences the user, and also conserves system resources.

## Claims

1. A method for recording a program for a mobile TV comprising:
receiving a program during a first broadcast;
detecting a corrupted segment of the program (302);
**characterized by**:
storing a first time and a second time of the corrupted segment detected during the first broadcast; wherein the first time corresponds to a start of the corrupted segment and the second time corresponds to an end of the corrupted segment (303); and
capturing a replacement segment during a second broadcast of the same program according to the first time and the second time of the corrupted segment detected during the first broadcast (304).

2. The method of claim 1 **characterized by**:
replacing the corrupted segment with the replacement segment captured during the second broadcast of the program.

3. The method of claim 2 **characterized by**:
displaying a notification message after completing replacement of the corrupted segment with the replacement segment.

4. A method for recording a program for a mobile TV comprising:
receiving a program during a broadcast (401);
detecting a corrupted segment of the program (402);
**characterized by**:
storing a first time and a second time of the corrupted segment detected during the broadcast; wherein the first time corresponds to a start of the corrupted segment and the second time corresponds to an end of the corrupted segment (403); and
downloading a replacement segment of the program from a server according to the first time and the second time; wherein the server contains the complete program (404).

5. The method of claim 4 **characterized by**:
replacing the corrupted segment with the replacement segment downloaded from the server.

6. The method of claim 5 **characterized by**:
establishing a file transfer protocol connection with the server before downloading the replacement segment from the server.

7. The method of claim 6 **characterized by**:
displaying a notification message after completing replacement of the corrupted segment with the replacement segment.

8. A method for recording of a program for a mobile TV comprising:
receiving a program during a first broadcast (501);
detecting a corrupted segment of the program (502);
**characterized by**:
storing a first time of the corrupted segment during the first broadcast of the program; wherein the first time is a start of the corrupted segment (503);
enabling a time-shifting mode after the first time of the first broadcast of the program; wherein the time-shifting mode enables pausing the first broadcast of the program at the first time (504);
and
resuming playback of the remaining segment of the program in the time-shifting mode (505).

9. The method of claim 8 **characterized by**:
re-capturing the remaining segment from the first time during the second broadcast before resuming playback; and
replacing the corrupted segment with the remaining segment.

10. The method of claim 8 **characterized by**:
downloading the remaining segment of the program starting from the first time from the server before resuming playback; and
replacing the corrupted segment with the remaining segment.

11. The method of claim 10 **characterized by**:
establishing a file transfer protocol connection with the server before downloading the remaining segment from the server.

12. The method of claim 9, **characterized by**:
displaying a notification message after completing replacement of the corrupted segment with the remaining segment.

13. The method of claim 10, **characterized by**:
displaying a notification message after completing replacement of the corrupted segment with the remaining segment.

14. A mobile device (200) capable of recording a program for a mobile TV, comprising:
a controller (20) for performing functions of the mobile device;
a storage device for receiving a program during a first broadcast;
a processor (22) coupled to the controller for executing program code to control the controller, comprising a detector for detecting a corrupted segment during the first broadcast; and
a memory (24) coupled to the processor for storing the program code, the program code (240) comprising:
code for storing a first time and a second time of the corrupted segment detected during the first broadcast; wherein the first time corresponds to a start of the corrupted segment and the second time corresponds to an end of the corrupted segment; and
**characterized by** the program code further comprising:
code for replacing the corrupted segment with a replacement segment retrieved from the original program according to the first time and the second time of the corrupted segment.

15. The mobile device of claim 14, **characterized in that** the program code further comprises code for replacing the corrupted segment with the replacement segment captured during a second broadcast of the same program.

16. The mobile device of claim 14, **characterized in that** the program code further comprises code for replacing the corrupted segment with the replacement segment downloaded from a server; wherein the server contains the complete program.

17. The mobile device of claim 16, **characterized in that** the program code further comprises code for displaying a notification message after completing replacement of the corrupted segment with the replacement segment.

18. A mobile device capable of recovering a corrupted period of a recording of a program for Mobile TV comprising:
a controller for performing functions of the mobile device;
a storage device for receiving a program during a first broadcast;
a processor coupled to the controller for executing program code to control the controller, comprising a detector for detecting a corrupted segment during the first broadcast; and
a memory coupled to the processor for storing the program code;
**characterized in that** the program code comprises:
code for storing a first time of the corrupted segment during the first broadcast of the program; wherein the first time is a start of the corrupted segment;
code for enabling a time-shifting mode after the first time of the first broadcast of the program; wherein the time-shifting mode enables pausing the first broadcast of the program at the first time; and
code for resuming playback of the remaining segment of the program in the time-shifting mode.

19. The mobile device of claim 18 **characterized in that** the program code further comprises code for re-capturing the remaining segment from the first time during the second broadcast before resuming playback; and replacing the corrupted segment with the remaining segment.

20. The mobile device of claim 18 **characterized in that** the program code further comprises code for downloading the remaining segment of the program starting from the first time from the server before resuming playback; and replacing the corrupted segment with the remaining segment.

21. The mobile device of claim 20, **characterized in that** the program code further comprises code for establishing a file transfer protocol connection with the server before downloading the remaining segment from the server.

22. The mobile device of claim 19, **characterized in that** the program code further comprises code for displaying a notification message after completing replacement of the corrupted segment with the remaining segment.

23. The mobile device of claim 20, **characterized in that** the program code further comprises code for displaying a notification message after completing replacement of the corrupted segment with the remaining segment.
